Europäisches Patentamt

**European Patent Office**

Office européen des brevets

(19)

(11) Veröffentlichungsnummer : **0 101 838**
**B1**

(12) **EUROPÄISCHE PATENTSCHRIFT**

(45) Veröffentlichungstag der Patentschrift :
**02.01.86**

(21) Anmeldenummer : **83106535.4**

(22) Anmeldetag : **05.07.83**

(51) Int. Cl.⁴ : **C 08 G 63/68, C 09 D 3/64**

(54) **Verfahren zur Herstellung von Phosphorsäuregruppen enthaltenden Polyesterharzen und deren Verwendung als Lackbindemittel.**

(30) Priorität : **29.07.82 AT 2923/82**
**14.04.83 AT 1326/83**

(43) Veröffentlichungstag der Anmeldung :
**07.03.84 Patentblatt 84/10**

(45) Bekanntmachung des Hinweises auf die Patenterteilung : **02.01.86 Patentblatt 86/01**

(84) Benannte Vertragsstaaten :
**BE CH DE FR GB IT LI SE**

(56) Entgegenhaltungen :
**AT-A- 326 922**
**DE-A- 2 204 844**
**US-A- 3 415 766**
**US-A- 3 574 566**

(73) Patentinhaber : **Vianova Kunstharz Aktiengesellschaft**
**A-8402 Werndorf (AT)**

(72) Erfinder : **Behmel, Lukas Klaus, Dr.**
**Wenisbucherstrasse 66**
**A-8044 Graz (AT)**
Erfinder : **Zückert, Bertram, Dr.**
**Krottendorferstrasse 90**
**A-8052 Graz (AT)**

(74) Vertreter : **Pitter, Robert, Dr. et al**
**Leechgasse 21 Postfach 191**
**A-8010 Graz (AT)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**0 101 838**

## Beschreibung

Die vorliegende Erfindung betrifft ein Verfahren zum Einbau von Phosphorsäuregruppen in Polyesterharze, welche als Lackbindemittel Verwendung finden.

Die Wirkung von Phosphorsäuregruppen in Lackbindemitteln ist aus vielen Literaturstellen grundsätzlich bekannt. So bestehen einerseits ausgeprägte Wechselwirkungen zwischen diesen Gruppen und dem Substrat, insbesonders Metallen, aber auch mit den Pigmenten und Füllstoffen, was zu wesentlichen Verbesserungen der Lackierungen, besonders in bezug auf die Haftfestigkeit und die Beständigkeitseigenschaften führt. Andererseits sind die Phosphorsäuregruppen günstige Härtungskatalysatoren für säurekatalysierte Vernetzungsmechanismen.

Diese Aspekte gewinnen im Zusammenhang mit den aktuellen Forderungen nach Lacken mit einem möglichst niedrigen Gehalt an schädlichen Stoffen, wie chromhaltigen Rostschutzpigmenten und geringerem Energieaufwand bei der Vernetzung, besondere Bedeutung.

Die beschriebenen Wirkungen sind zum Teil den sauren Phosphorsäuregruppen direkt, zum Teil den entsprechenden Phosphatanionen zuzuschreiben. In diesem Sinne werden in der vorliegenden Anmeldung unter « Phosphorsäuregruppen » sowohl die sauren Verbindungen als auch ihre Salze mit organischen oder anorganischen Basen verstanden. Nicht eingeschlossen sind jedoch die nichtionischen Derivate von Phosphorsäuregruppen wie z. B. Ester.

Die Frage nach der korrosionshemmenden Wirkung oder der Härtungscharackteristik von Lacken kann in der Praxis nicht isoliert von einer Reihe anderer lacktechnischer Eigenschaften, wie der Lagerstabilität und Applizierbarkeit der Lacke oder der Möglichkeit, einwandfrei glänzende pigmentierte Lackierungen zu erhalten, betrachtet werden. Ebenso müssen die erzielten Verbesserungen auch unter den wechselnden Bedingungen der Praxis eindeutig feststellbar sein, was wiederum bedingt, daß die Konzentration an Phosphorsäuregruppen, je nach Bindemitteltyp, bestimmte Mindestwerte überschreitet. Nach der AT-PS 356 782 sind z. B. zur Erzielung einer guten Wasserfestigkeit auf unbehandeltem Eisenblech bei typischen High-Solid-Bindemitteln Werte in der Größenordnung von etwa 0,3 Mol/kg erforderlich.

Die Zugabe von Phosphorsäuren oder ihrer niedermolekularen Derivate zu pigmentierten Lacken führt jedoch bereits bei Konzentrationen an Phosphorsäuregruppen deutlich unter 0,3 Mol/kg zu einer Reihe von gravierenden Störungen, wie z. B. Glanzverlust und Verschlechterung der Verformbarkeit der gehärteten Filme. Sie wird daher in der Praxis nur bei der Formulierung von « wash-primern » zur Herstellung matter, korrosionshemmender und haftungsverbessernder Überzüge mit geringer Schichtstärke angewandt.

Der Einbau von Phosphorsäuregruppen in Lackbindemittel oder kombinationen wird in vielen Literaturstellen, z. B. in der DE-OS 22 04 844, der GB-PS 13 77 854 und den US-PSen 34 15 766 und 35 74 566, beschrieben. Die angewandten Verfahren entsprechen jedoch nicht den oben angeführten Zielsetzungen, besonders hinsichtlich der Möglichkeit, Bindemittel herzustellen, die auch bei hohem Gehalt an Phosphorsäuregruppen störungsfreie und bei entsprechender Pigmentierung hochglänzende Lackierungen ergeben.

In den US-PSen 41 78 319, 41 78 320, 41 78 323 und 41 78 324 werden oligomere, saure Phosphorsäureester mit Epoxidgruppen enthaltenden Polymeren bei einem molaren Verhältnis Säuregruppen : Epoxidgruppen um 1 : 1 kombiniert. Durch die Reaktion zwischen den beiden Gruppen können zwar Störungen vermieden werden, der Gehalt an freien Phosphorsäuregruppen wird dabei jedoch entscheidend herabgesetzt. Solche Kombinationen stellen somit ebenfalls keine Lösung für die gestellte Aufgabe dar.

Nach der AT-PS 356 782 können die genannten Störungen dadurch vermieden werden, daß man die Phosphorsäure nach einem speziellen Verfahren in das Bindemittel einbaut. Das Verfahren zielt im wesentlichen darauf ab, den Gehalt an freier Phosphorsäure oder an nicht chemisch gebundenen niedermolekularen Derivaten der Phosphorsäuren weitgehend herabzusetzen. Gemäß dieser Literaturstelle werden saure Phosphorsäurederivate mit Amino-Aldehyd-Kondensationsprodukten reagiert und das erhaltene Kondensat mit Hydroxygruppen tragenden Komponenten gemischt oder partiell umgesetzt. Das Verfahren gestattet die Herstellung von Bindemitteln für wärmehärtende Einkomponentenlacke, die störungsfreie, bei geeigneter Pigmentierung hochglänzende Lackierungen mit gutem Korrosionsschutz ergeben. Dabei eignet es sich in besonderer Weise für die Synthese von Bindemitteln für festkörperreiche Lacke.

Bei der Herstellung von Bindemitteln mit höherem Molekulargewicht treten beim Verfahren gemäß der AT-PS 356 782 häufig Verträglichkeitsprobleme zwischen den Reaktionspartnern auf, insbesonders, wenn die Hydroxylkomponenten höhere Molekulargewichte aufweisen. Dadurch wird für eine Reihe von wichtigen Anwendungsgebieten, wie z. B. die Herstellung stanzbarer, extrem verformbarer und sterilisationsfester Lackierungen für das Lackieren von Tuben aus Aluminium, oder die Formulierung von Lacken, die bereits durch die Abgabe des Lösungsmittels trocknen die Möglichkeit zur Synthese von verbesserten Bindemitteln mit chemisch gebundenen Phosphorsäuregruppen stark eingeschränkt.

Eine Möglichkeit zur Herstellung von höhermolekularen Polyesterharzen wird in der DE-OS 17 45 791 gegeben, wobei die Veresterungsreaktion in verdünnter Lösung und gegebenenfalls unter Druck erfolgt,

2

wobei es möglich ist, die Reaktion über den theoretischen Gelierungspunkt hinaus weiterzuführen, ohne daß dabei unbrauchbare Produkte entstehen.

Es hat sich nun überraschenderweise gezeigt, daß es mit Hilfe einer solchen Verfahrensweise, d. h. der Polyveresterung in verdünnter Lösung, gelingt, Phosphorsäuregruppen quantitativ in Polyesterharze einzubauen. Dadurch ist es möglich, auch Lackbindemittel mit höherem Gehalt an Phosphorsäuregruppen herzustellen, welche sich zur Herstellung störungsfreier und bei entsprechender Pigmentierung hochglänzender Lackierungen mit hoher Korrosionsfestigkeit eignen, wobei die Lackierungen überdies ausgezeichnete mechanische Eigenschaften aufweisen.

Die vorliegende Erfindung betrifft dementsprechend ein Verfahren zur Herstellung von Phosphorsäuregruppen enthaltenden, gegebenenfalls modifizierten Polyesterharzen unter praktisch vollständiger Bindung der eingesetzten Phosphorsäure (derivate), welches dadurch gekennzeichnet ist, daß man bei einem Polyesteransatz, in welchem der Polysäureanteil mindestens 0,1, vorzugsweise 0,2 bis 1,5 Mol/kg des Fertigproduktes Phosphor in Form einer Polyphosphorsäure und/oder eines sauren Phosphorsäureesters ein- oder mehrwertiger Alkohole enthält, die Veresterungsreaktion in einer 40 bis 80 Gew.-% Feststoffgehalt enthaltenden Lösung in einem oder mehreren in bezug auf die eingesetzten Rohstoffe inerten Verdünnungsmittel bis zur praktisch vollständigen Bindung der Phosphorsäure und einer Grenzviskositätszahl von 3,0 bis 25,0 ml/g (DMF, 20 °C) führt.

Es hat sich weiterhin gezeigt, daß innerhalb des anspruchsgemäß gegebenen Rahmens für bestimmte Anwendungszwecke Polyester mit bestimmten Phosphorsäureanteilen und bestimmten Grenzviskositätszahlbereichen bevorzugt eingesetzt werden können.

Die bevorzugten Bereiche sind für normale Spritzlacke : 0,2 bis 0,8 Mol Phosphor pro 1 kg Fertigprodukt und ein Grenzviskositätszahlbereich von 3,0 bis 5,0 ml/g (DMF, 20° C) für sterilisationsfeste, flexible Spritz- oder Walzlacke (z. B. Tubenlacke) : 0,3 bis 1,5 Mol Phosphor pro 1 kg Fertigprodukt und eine Grenzviskositätszahl von mindestens 6,0, vorzugsweise von 8,0-25,0 ml/g (DMF/20 °C).

Unter dem Begriff « Polyester » werden sowohl Polyester im engeren Sinne als auch modifizierte Produkte, wie Alkydharze oder Polyester, die anteilsweise Polymerisate von äthylenisch ungesättigten Verbindungen, Polyäther oder Urethangruppierungen enthalten, verstanden. Die für diese Produkte einsetzbaren Rohstoffe sind dem Fachmann bekannt und werden in vielen Fachbüchern, beispielsweise in K. WINNACKER und L. KÜCHLER « Chemische Technologie » (C. Hanser Verlag, München 1972) oder in ULLMANNS ENCYKLOPÄDIE DER TECHNISCHEN CHEMIE, 4. Auflage, Band 15, Verlag Chemie GmbH, Weinheim 1978 beschrieben.

Zur Einführung der Phosphorsäuregruppen dienen bevorzugt Polyphosphorsäuren z. B. der allgemeinen Formel $H_{n+2}P_nO_{3n+1}$ mit 3 oder mehr Phosphoratomen im Molekül und P-O-P-Bindungen. Diese Säuren liegen üblicherweise in technisch anfallenden Mischungen mit einem $P_4O_{10}$-Gehalt zwischen etwa 80 und 90 % vor. In den Handel kommen diese Phosphorsäuren bevorzugt in 2 Varianten, nämlich mit ca. 76 % und ca. 84 % $P_2O_5$. Daneben können auch die handelsüblichen Gemische aus Mono- und Diestern, wie sie durch Umsetzung von Phosphorsäure (84 % $P_2O_5$) mit ein- oder mehrwertigen Alkoholen erhalten werden, eingesetzt werden. Diese Estergemische enthalten üblicherweise Anteile freier Phosphorsäuren.

Die Formulierung der Ansätze erfolgt nach den gleichen allgemeinen Prinzipien, wie sie dem Fachmann aus der Herstellung phosphorsäurefreier Polyester bekannt und beispielsweise bei H. G. ELIAS, « Makromoleküle » (HÜTHIG und WEPF, Basel-Heidelberg 1971) beschrieben sind. Bei der Formulierung von Ansätzen für das erfindungsgemäße Verfahren kann dabei zunächst von der Annahme ausgegangen werden, daß jedes Mol Phosphor in einer der eingesetzten Phosphorsäuren bezüglich der Funktionalität 1 Mol einer Dicarbonsäure ersetzt und daß dabei je Mol Phosphor jeweils 1 Mol an zusätzlichen Säuregruppen auftritt.

Als inerte Verdünnungsmittel werden Produkte eingesetzt, die unter den Bedingungen des erfindungsgemäßen Verfahrens praktisch keine chemischen Reaktionen zeigen. Bevorzugt sind dabei Verdünnungsmittel, die mit Wasser nicht oder nur in geringem Ausmaß mischbar sind, wie beispielsweise Toluol, Xylol oder seine höheren Homologen, die die Abtrennung des bei der Herstellung der Polyester gebildeten Wassers durch Anwendung eines Kreislaufverfahrens erleichtern oder solche Verdünnungsmittel, deren Siedepunkte deutlich über den zur Herstellung der Polyesterharze benötigten Mindesttemperaturen von ca. 150-200 °C liegen. Neben den genannten Aromaten können die handelsüblichen aromatischen oder aliphatischen Kohlenwasserstoff-Lösungsmittel mit Siedebereichen, welche zwischen 110 und 220 °C, insbesondere 130 und 220 °C liegen, oder deren Mischungen eingesetzt werden. Andere inerte Verdünnungsmittel sind beispielsweise Ketone oder chlorierte Kohlenwasserstoffe. Die Verdünnungsmittel sollen mit dem jeweiligen Ansatz, zumindest bei der Reaktionstemperatur und gegen Ende der Umsetzung, homogene Mischungen ergeben ; die vollständige oder auch nur teilweise Löslichkeit der Polyesterharze im Verdünnungsmittel bei Raumtemperatur ist jedoch nicht erforderlich.

Das erfindungsgemäße Verfahren kann in den üblichen Universal-Kunstharzanlagen (s. z. B. K. Winnacker und L. Küchler « Chemische Technologie », C. Hanser Verlag, München 1972) durchgeführt werden. Dank des ausgeprägten katalytischen Effektes der Phosphorsäuregruppen werden dabei auch bei der Verwendung relativ niedrig siedender Verdünnungsmittel, wie z. B. Xylol, und daher vergleichsweise niederen Reaktionstemperaturen Reaktionszeiten erzielt, die in dem für die Herstellung von unmodifizierten Polyestern üblichen Rahmen liegen. Eine Verwendung spezieller Apparaturen, die eine Beschleunigung der Reaktion in Lösung auf das bei unverdünnten Ansätzen übliche Ausmaß durch Umsetzung bei erhöhten Temperaturen unter erhöhtem Druck ermöglichen, wie sie z. B. in der DE-OS 17 45 791 beschrieben werden, ist daher bei dem erfindungsgemäßen Verfahren nicht erforderlich.

Das verwendete Verdünnungsmittel kann sowohl am Beginn des Herstellungsprozesses als auch zu einem geeigneten späteren Zeitpunkt, beispielsweise nachdem die verwendeten Rohstoffe eine klare Schmelze gebildet haben, zugesetzt werden. Eine stufenweise Zugabe, bei der in den früheren Stufen des Herstellungsprozesses eine höhere Reaktionstemperatur eingehalten werden kann, ist ebenfalls möglich und erlaubt eine Herabsetzung der Reaktionszeiten.

Die Menge der beim erfindungsgemäßen Verfahren eingesetzten Verdünnungsmittel wird so bemessen, daß der Festkörpergehalt während der Reaktion zwischen 40 und 80 % liegt. Zur Erzielung der durch das erfindungsgemäße Verfahren charakteristischen Vorteile ist es, vor allem in der Schlußphase der Veresterung, notwendig, den Ansatz so weit zu verdünnen, daß der praktisch vollständige Einbau der Phosphorsäureverbindung ohne Gelbildung erreicht wird. Der Ansatz muß selbstverständlich bei allen in Frage kommenden Temperaturen eine entsprechend niedrige Viskosität aufweisen. Eine weitere Herabsetzung des Festkörpergehaltes ist notwendig, wenn eine enge Molekulargewichtsverteilung angestrebt wird.

Die Reaktion wird vorteilhaft anhand der Grenzviskositätszahl [$\eta$] bzw. der Säurezahl verfolgt. Bei der Grenzviskositätszahl [$\eta$], gemessen in Dimethylformamid, wird ein Bereich zwischen 3 und 25 ml/g angestrebt. Die Säurezahl der Produkte kann zwischen 10 und 80 mg KOH/g liegen.

Bei der Beurteilung des Umsatzes beim Einbau der sauren Phosphorsäureester in den Polyester kann auch von der Eigenschaft niedermolekularer saurer Phosphorsäureester oder der freien Phosphorsäure ausgegangen werden, welche bereits in geringen Konzentrationen in mit Titandioxid pigmentierten Polyester-Aminoplast-Kombinationen Glanzstörungen hervorrufen. Durch Untersuchung verschiedener Muster mit unterschiedlichem Kondensationsgrad kann somit in praxisnaher Weise der Einbau der Phosphorsäureester beurteilt werden.

Zur Festlegung des Endpunktes der Reaktion kann die Ausbildung eines einwandfreien und glänzenden Lackfilms aus einem mit Titandioxid im P/B-Verhältnis 0,8 : 1 pigmentierten Lackes dienen.

Nach Abschluß der Reaktion können dem Ansatz gegebenenfalls weitere Lösungsmittel zugegeben werden. Diese Lösungsmittel müssen selbstverständlich den oben angeführten Kriterien für die Verdünnungsmittel nicht entsprechen. Bei Zugabe von Lösungsmitteln mit aktiven Wasserstoffatomen oder Estergruppen kann es dabei, auch bei Raumtemperatur, unter dem katalytischen Einfluß der freien Phosphorsäuregruppen, zu einer Spaltung der Polyesterkette und damit zu einem Rückgang des Molekulargewichtes kommen. Falls dieser Effekt nicht erwünscht ist, müssen die freien Phosphorsäuregruppen, zumindest teilweise, vor der Zugabe des aktiven Lösungsmittels mit geeigneten Basen, wie Aminen, vorzugsweise Alkanolammen, in die Salzform übergeführt werden. Diese Maßnahme kann auch, etwa bei Kombination mit Amino-Formaldehyd-Harzen, zur Verbesserung der Lagerstabilität nützlich sein. Die Art und die Menge des Blockierungsmittels wird dabei in der dem Fachmann bekannten Weise im Hinblick auf die gewünschte Reaktivität und Lagerstabilität festgelegt. Dabei ist es besonders bemerkenswert, daß die nach dem erfindungsgemäßen Verfahren hergestellten Bindemittel in Kombination mit Aminoplasten, selbst bei Zugabe von wenig flüchtigen Aminen, wie Diäthanolamin oder 2-Amino-2-äthyl-1,3-propandiol, nur geringfügig in ihrer Reaktivität herabgesetzt werden.

Die nach dem erfindungsgemäßen Verfahren hergestellten Bindemittellösungen werden, wie die üblichen Polyesterharze, gegebenenfalls mit weiteren Harzkomponenten, wie z. B. Aminoplasten, bzw. mit Pigmenten, Füllstoffen, Zusatzstoffen und Lösungsmitteln zu Lacken verarbeitet. Im Vergleich zu Lackierungen aus den analog aufgebauten phosphorsäuregruppenfreien Produkten sind die Wasserfestigkeit und die korrosionsschützende Wirkung wesentlich verbessert. Bei der Kombination mit Aminoharzen können, auch bei Einsatz vollständig verätherter Typen, tiefe Härtungstemperaturen angewandt werden.

Bei Auswahl der entsprechenden Bereiche für den Phosphorgehalt bzw. der Grenzviskositätszahl der Polyester können einerseits Lacke formuliert werden, welche insbesondere für den Spritzauftrag geeignet sind. Solche Lacke zeigen bereits bei Einbrenntemperaturen von ca. 100 °C die angegebenen vorteilhaften Filmeigenschaften. Dies gilt besonders für einen Gehalt von 0,2 bis 0,8 Mol Phosphor pro Kilogramm Polyester, wobei der Phosphor verfahrensgemäß in Form einer Polyphosphorsäure und/oder saurer Phosphorsäureester von ein- oder mehrwertigen Alkoholen zum Einsatz gelangt, und einen Grenzviskositätszahlbereich von 3.0 bis 5.0 ml/g (DMF, 20° C). Andererseits eignet sich das erfindungsgemäße Verfahren in besonderer Weise zur Herstellung höhermolekularer Produkte, wie sie für extrem verformbare Lackierungen benötigt werden. Entsprechend aufgebaute Produkte mit einem Gehalt zwischen 0,3 und 1,5 Mol Phosphor pro kg Polyester und einer Grenzviskositätszahl von mehr als 6 ml/g (DMF, 20 °C) gestatten es, in Stanzlacken die gewünschten Eigenschaften, wie Tiefziehbarkeit und Sterilisationsfestigkeit, schon bei Härtungstemperaturen ab 120-140 °C bzw. sehr kurzen Härtungszeiten bei üblichen Temperaturen zu erreichen und Lacke für Tuben aus Aluminium mit hervorragender « Kältefestigkeit », d. h. guter Haftung und Verformbarkeit bei rascher Deformation bei tiefer Temperatur zu formulieren. Es ist dabei besonders vorteilhaft, daß das Molekulargewicht bei diesen erfindungsgemäß hergestellten Bindemitteln deutlich tiefer eingestellt werden kann als bei nicht mit Phosphorsäuregruppen modifizierten Produkten, wie sie beispielsweise in den Europäischen Patentanmeldungen 0 025 089 und 0 025 478, den DE-PS en 2 521 791 und 2 521 792 und den DE-AS en 1 808 776, 2 126 048 und 2 211 059 beschrieben werden, wodurch die Handhabung der Bindemittellösungen und die Herstellung der Lacke stark erleichtert und der Feststoffgehalt bei der Applikation deutlich angehoben wird.

Erfindungsgemäß hergestellte höhermolekulare Bindemittel ergeben bei geeigneter Zusammensetzung nach Abgabe der Lösungsmittel auch bei Raumtemperatur harte flexible Filme. Bei Kombination mit Aminoharzen kann dabei noch zusätzlich eine chemische Vernetzung erzielt werden. Im Gegensatz zu den üblichen säurehärtenden Lacken kann jedoch hier das Aminoharz in untergeordneten Anteilen eingesetzt werden, wodurch ein Versprôden der Lackierung bei der Alterung vermieden werden kann. Die so erhaltenen Überzüge besitzen eine gute Wasserfestigkeit und gute korrosionshemmende Eigenschaften.

Die folgenden Beispiele erläutern die Erfindung, ohne sie in ihrem Umfang zu beschränken. Alle Angaben in Teilen oder Prozenten beziehen sich, soferne nicht anders angegeben, auf Gewichtseinheiten. Die Messung der Grenzviskositätszahl erfolgte in allen Fällen in Dimethylformamid (DMF bei 20 °C).

Durchführung der in den Beispielen angegebenen Prüfungen

Pendelhärte : KÖNIG, DIN 53 157

Glanzschleierwert : gemessen mit Gonioreflektometer GR-COMP® (Vianova, $\beta = - \log (I_S/I_R)$

$I_S$ Intensität des Streulichtes bei 22,4°

$I_R$ Intensität des reflektierten Lichtes bei 20° am Glasstandard (n = 1,567) ; Beleuchtungsblende = Meßblende = 0,6°

Meßwerte über 2,3 werden bei Weißlacken subjektiv als hochglänzend beurteilt.

Tiefung : nach ERICHSEN DIN 53 156

Schlagfestigkeit : nach GARDNER

Angabe in inch × pounds (1 inch × pound = 0,113 Joule)

Steinschlagtest A :

Auf die unter 45° geneigte lackierte Fläche werden 1 000 g Schraubenmuttern (Typ HM 6-2980.100.656) aus 5 m Höhe durch ein Rohr von 38 mm Durchmesser fallen gelassen. Nach Entfernung der gelockerten Lackteilchen wird der Gewichtsverlust bestimmt, wobei ein Verlust von weniger als 20 mg als sehr gut beurteilt wird.

Steinschlagtest B :

Die lackierte Fläche wird zweimal mit je 500 g scharfkantigem Stahlschrott (4-5 mm) in einem Aufprallwinkel von 45° aus einer Entfernung von 20 cm beschossen (Preßluftdruck : 2 bar). Bestimmt wird der Gewichtsverlust, bezogen auf 100 cm$^2$ beschossener Fläche. Werte unter 25 mg Gewichtsverlust gelten als sehr gut.

Dornbiegetest : Konischer Dorn, kleinster Radius 6 mm.

Kältefestigkeit : Das lackierte Blech wird nach einstündigem Lagern bei − 20 °C schlagartig gestaucht und nach Erwärmen auf Raumtemperatur wieder gestreckt.

Benotung : 1 Lackierung unversehrt
5 Lackierung weitgehend abgeplatzt

Tiefziehfähigkeit : mit der ERICHSEN Lackprüfmaschine Modell 225 werden Rundnäpfchen hergestellt.

Benotung : 1 keine Rißbildung
5 starkes Abplatzen

Sterilisationsfestigkeit : Die Rundnäpfchen werden 1 Stunde bei 1,4 bar Überdruck (121 °C) sterilisiert.

Benotung : 1 Lackierung unverändert
2 starke Ablösung und/oder Glanzverlust

I) Polyesterharze zur Formulierung von Lacken für die Spritzapplikation ([η] = 3-5ml/g, P = 0,2-0,8).

Beispiele 1-4

In einer Universal-Kunstharz-Apparatur, wie sie beispielsweise in K. Winnacker, L. Küchler « Chemische Technologie », C. Hanser Verlag München, 1972 im Band 5, Seite 402 beschrieben wird, werden die in Tabelle 1 angeführten Polyole und Carbonsäuren auf 120 bis 140 °C erhitzt und nach dem Aufschmelzen die Phosphorsäureverbindung zugesetzt. 30 Minuten nachdem eine klare Schmelze entstanden ist wird der Ansatz mit dem angegebenen Verdünnungsmittel auf einen Festkörpergehalt von 60 % verdünnt. Anschließend wird die Reaktion im Azeotropverfahren bis zu den angegebenen Endwerten geführt. In der Tabelle 1 werden Abkürzungen mit folgender Bedeutung verwendet.

0 101 838

PSA Phthalsäureanhydrid
THPSA Tetrahydrophthalsäureanhydrid
AS Adipinsäure
NPG Neopentylglykol
CON 50 Techn. Linolsäure (ca. 50 % konjugierte Fettsäure)
TMP Trimethylolpropan
PP 84 Polyphosphorsäure (84 % $P_2O_5$)
AKW 2 aromatischer Kohlenwasserstoff (Siedebereich 162-176 °C, Kauri-Butanolwert ca. 90)
DIBUK Diisobutylketon

Tabelle 1

| | Grundansatz Tle | Phosphorsäure Mol/kg | Verdünnungsmittel (% Festkörpergehalt) | Enddaten $[\eta]$ /Säurezahl |
|---|---|---|---|---|
| 1. | 73 THPSA<br>10 AS<br>75 NPG<br>11 TMP<br>4,5 PP 84 | 0,33 | AKW 2<br><br>60 % | 3,75/31,0 |
| 2. | 73 THPSA<br>10 AS<br>75 NPG<br>11 TMP<br>4,5 PP 84 | 0,33 | DIBUK<br><br>60 % | 4,2/29,5 |
| 3. | 75 THPSA<br>20 CON 50<br>67 NPG<br>21 TMP<br>9 PP 84 | 0,59 | AKW 2<br><br>60 % | 3,8/41,3 |
| 4. | 71 PSA<br>30 AS<br>80 NPG<br>11 TMP<br>4,5 PP 84 | 0,30 | AKW 2<br><br>60 % | 4,7/26,9 |

Lacktechnische Prüfungen unter Verwendung der gemäß Beispiel 1-4 hergestellten Bindemittel

1) In bekannter Weise wird unter Verwendung einer Perlmühle ein Lack folgender Zusammensetzung hergestellt :

100 Tle Titandioxid (Rutil)
85 Tle Bindemittel gemäß Beispiel 1 (berechnet als Festharz)
15 Tle Hexamethoxymethylmelamin (HMMM)
0,5 Tle eines handelsüblichen Lackadditives auf Siliconbasis.

Der Lack wird mit einem Gemisch aus Monoäthylenglycolmonoäthylätheracetat/Butylacetat (1 : 1) auf eine Viskosität gemäß DIN 53 211/20 °C von 20 Sekunden eingestellt (Einbrennrückstand ca. 67 % bei 25 Min/130 °C) und mit einer Luft-Spritzpistole auf entfettetes Stahlblech mit einer Trockenfilmstärke von 35 bis 40 μm appliziert.
In der Tabelle 2 sind die Ergebnisse mit den jeweils 25 Minuten bei den angegebenen Temperaturen gehärteten Filmen angegeben. Die erhaltenen Filme waren in allen Fällen hochglänzend.

Tabelle 2

| Härtungs-temperatur | Pendelhärte (s) | Glanzschleier (ß) | Tiefung (mm) | Schlagfestigkeit inch/pounds |
|---|---|---|---|---|
| 110°C | 166 | 2,98 | 7,1 | 80 / 70 |
| 150°C | 160 | 2,73 | 7,1 | 70 / 60 |
| 170°C | 163 | 2,41 | 6,6 | 60 / 30 |

6

In analoger Weise wurde das Bindemittel gemäß Beispiel 2 geprüft, wobei sich im Rahmen der Fehlergrenzen die gleichen Testwerte ergaben.

2) Geprüft wurde eine Füllerformulierung folgender Zusammensetzung :

50 Tle Titandioxid (Rutil)
50 Tle Blanc fixe
1,5 Tle hochdisperse Kieselsäure
0,3 Tle Farbruß
85 Tle Bindemittel gemäß Beispiel 3 (berechnet als Festharz)
15 Tle HMMM
0,5 Tle eines handelsüblichen Lackadditives auf Siliconbasis

Der Einbrennrückstand bei einer Viskosität (DIN 53 211/20 °C) von 21 Sekunden betrug ca. 63 %. Der Lack wurde durch Spritzen mit einer Trockenfilmstärke von 35 bis 40 µm appliziert. Die Ergebnisse bei verschiedenen Einbrenntemperaturen (Einbrennzeit 25 Min.) sind in Tab. 3 zusammengefaßt.

Tabelle 3

| Härtungs-temperatur | Pendelhärte (s) | Tiefung (mm) | Schlagfestigkeit (Fläche) (inch/pounds) | Steinschlagtest A (Gewichtsverlust) |
|---|---|---|---|---|
| 90°C | 68 | 8,6 | 50 | 7 mg |
| 110°C | 94 | 7,0 | 30 | 19 mg |
| 150°C | 91 | 5,8 | 20 | 15 mg |

Für Pendelhärte, Tiefung und Schlagfestigkeit wurde als Substrat entfettetes Stahlblech verwendet. Die Prüfung auf Steinschlagfestigkeit wurde in einem Aufbau bestehend aus K-ETL-Grundierung, Füller aus erfindungsgemäßem Bindemittel und einem handelsüblichen Autodecklack auf Basis eines fremdvernetzenden Acrylatbindemittels durchgeführt.

3) Aus dem Bindemittel gemäß Beispiel 4 wurden verschiedene Lacke formuliert, und zwar
Lack 1 : ein hochglänzender roter Decklack
Lack 2 : ein hochglänzender weißer Decklack
Lack 3 : ein Automobilfüller
Die Lackzusammensetzungen und Prüfergebnisse sind in den Tabellen 4 und 5 zusammengefaßt.

Tabelle 4 (Lackzusammensetzungen)

| Lack | 1 | 2 | 3 |
|---|---|---|---|
| Bindemittel (Festharz) | 85 | 80 | 85 |
| HMMM | 15 | -- | 15 |
| Isobutanoloveräthertes mittelreaktiven Melaminharz (Festharz) | -- | 20 | -- |
| Titandioxid | -- | 100 | 50 |
| BaSO$_4$ (gefällt) | -- | -- | 50 |
| HD-Kieselsäure | -- | -- | 1,5 |
| Farbruß | -- | -- | 0,3 |
| Molybdatrot | 42 | -- | -- |
| Chinacridonrot | 4 | -- | -- |
| Diäthanolamin | 0,5 | -- | -- |
| Lackadditiv (Siliconbasis) | 0,5 | 0,5 | 0,5 |

# 0 101 838

Tabelle 4 (Fortsetzung)

| Lack | 1 | 2 | 3 |
|---|---|---|---|
| Verdünnung | EGLAC-BUAC 1:1 | | |
| Einbrennrückstand (30/120°C) % | 57 | 63 | 65 |
| Visk. (DIN 53 211) Sekunden | 21 | 23 | 23 |
| Trockenfilm µm | 35 – 40 | 35 – 40 | 35 – 40 |

Tabelle 5

| Lack | 1[1] | | | 2[1] | | 3[1] | | |
|---|---|---|---|---|---|---|---|---|
| Einbrenntemp. °C (25 Min) | 110 | 130 | 15C | 110 | 130 | 90 | 110 | 150 |
| Pendelhärte (sek.) | 122 | 175 | 171 | .130 | 154 | 122 | 158 | 145 |
| Glanzschleier(ß) | 2,61 | 2,49 | 2,25 | 2,73 | 2,44 | – | – | – |
| Tiefung (mm) | 9,8 | 9,8 | 8,6 | 7,4 | 5,6 | 9,4 | 8,0 | 6,7 |
| Schlagfestigkeit (inch / pound) | 80/80 | 80/30 | 70/30 | 80/70 | 80/50 | 60 | 50 | 30 |
| Steinschlagfestigkeit (mg Gewichtsverlust) | | | | | | $15^{(2)} 10^{(2)} 11^{(2}$ | $23^{(3)} 18^{(3)} 16^{(3}$ | |
| Dornbiegetest 6 mm | | | | | | keine Beschädigung | | |

1) Substrat : entfettetes Stahlblech
2) geprüft im Gesamtaufbau, wie vorne angegeben, gemäß Steinschlagtest A
3) geprüft im Gesamtaufbau mit K-ETL-Grundierung und Decklack nach Formulierung 2 aus Tabelle 4, gemäß Steinschlagtest B.

II) Polyesterharze zur Formulierung von sterilisationsfesten und hochflexiblen Einbrennlacken ($[\eta]$ = über 6 ml/g ; P = 0,3-1,5 Mol/kg)

## Beispiel 5

In einer Apparatur, wie sie im Beispiel 1 beschrieben ist, werden 62 Tle Isophthalsäure, 20 Tle Hexandiol-1,6, 18 Tle Trimethylolpropan und 12 Tle einer handelsüblichen Polyphosphorsäure ($P_2O_5$-Gehalt 84 %) auf 200 °C erhitzt, wobei eine Dampftemperatur von 110 °C vor dem Kühler nicht überschritten werden soll. 30 Minuten nachdem eine klare Schmelze entstanden ist, wird der Ansatz mit einem aromatenreichen Kohlenwasserstoff-Lösungsmittel (Siedebereich 162-176 °C, Kauri-Butanol-Wert ASTM D-1133 ca. 90) auf einen Festkörpergehalt von 60 % verdünnt.

Anschließend wird die Reaktion bei ca. 170 °C im Azeotropverfahren bis zu einer Säurezahl von 58 mg KOH/g und einer Grenzviskositätszahl $[\eta]$ von 12 ml/g weitergeführt. Nach Abkühlen auf 110 °C werden 9 Tle Dimethyläthanolamin zugegeben und der Ansatz mit Monoäthylenglykolmonobutyläther auf einen Festkörpergehalt von 55 % verdünnt. Das Produkt enthält 0,92 Mol/kg Phosphorsäure.

## Beispiele 6-14

Entsprechend der in Tab. 6 gemachten Angaben werden in gleicher Weise wie in Beispiel 5 phosphorsäuremodifizierte Polyester hergestellt. Folgende Abkürzungen werden in den Beispielen sowie in der Beschreibung der Lackprüfung verwendet.

PSA Phthalsäureanhydrid
THPSA Tetrahydrophthalsäureanhydrid
IPS Isophthalsäure
AS Adipinsäure
NPG Neopentylglykol
HXD Hexandiol-1,6
TMP Trimethylolpropan
HPN Hydroxypivalinsäureneopentylglykolester
PP 84 Polyphosphorsäure (84 % $P_2O_5$)
AKW 1 aromatischer Kohlenwasserstoff (Siedebereich 186-205 °C, Kauri-Butanolwert 92,5)
AKW 2 aromatischer Kohlenwasserstoff (Siedebereich 162-176 °C, Kauri-Butanolwert ca. 90)
DMEA Dimethyläthanolamin
DOLA Diäthanolamin
DEDEE Diäthylenglykoldiäthyläther
DEDME Diäthylenglykoldimethyläther
BUGL Monoäthylenglykolmonobutyläther
BUDIGL Diäthylenglykolmonobutyläther
BUAC Butylacetat
EGL Monoäthylenglykolmonoäthyläther
EGLAC Monoäthylenglykolmonoäthylätheracetat

## Tabelle 6

| | Grundansatz Tle | Phosphorsäure Mol/kg | Verdünnungsmittel (%Festkörpergehalt) | Enddaten [%]/Säurezahl | Base Tle | Lösungsmittel (%Festkörpergehalt) |
|---|---|---|---|---|---|---|
| | 76 PSA | | AKW 1 | 11,2/52,3 | 10 DMEA | DEDEE (55 %) |
| 6 | 30 NPG | 0,92 | ⟶ 60 % | | | |
| | 28 HXD | | | | | |
| | 18 TMP | | | | | |
| | 12 PP 84 | | | | | |
| 7 | 89 THPSA | | AKW 2 | 22,1/26,9 | – | – |
| | 114 HPN | 0,34 | ⟶ 80 % | | | |
| | 12 TMP | | bei Säurezahl 40 | | | |
| | 6 PP 84 | | ⟶ 60 % | | | |
| 8 | 45 IPS | | AKW 2 | 16,4/34 | 5 DOLA | BUGL (60 %) |
| | 57 AS | | ⟶ 65 % | | | |
| | 64 NPG | 0,43 | | | | |
| | 18 TMP | | | | | |
| | 6 PP 84 | | | | | |
| 9 | 40 IPS | | AKW 2 | 15,5/35 | | |
| | 63 AS | | ⟶ 60 % | | | |
| | 67 NPG | 0,43 | | | | |
| | 16 TMP | | | | | |
| | 6 PP 84 | | | | | |
| 10 | 91 IPS | | XYLOL | 21,4/64,4 | | BUAC |
| | 96 HPN | | ⟶ 80 % | | | 65 % |
| | 24 TMP | 0,69 | bei Säurezahl 70 | | | |
| | 12 PP 84 | | ⟶ 70 % | | | |

Tabelle 6 (Fortsetzung)

| | Grundansatz Tle | Phosphorsäure Mol/kg | Verdünnungsmittel (%Festkörpergehalt) | Enddaten $[\eta]$ /Säurezahl | Base Tle | Lösungs- mittel (% Fest- körpergehalt) |
|---|---|---|---|---|---|---|
| 11 | 74 IPS<br>20 AS<br>30 NPG<br>49 HPN<br>18 TMP<br>6 PP 84 | --.· | AKW 1<br>——→ 60 % | 18,2/34,3 | -- | DEDME<br>55 % |
| 12 | Ansatz wie 11 | -- | AKW 1<br>——→ 60 % | 19,1/31,1 | 10 DMEA | BUGL<br>55 % |
| 13 | Ansatz wie 11 | -- | AKW 2<br>——→ 60 % | 18,9/32,7 | DOLA | BUGL<br>55 % |
| 14[+)] | 77 IPS<br>20 AS<br>32 NPG<br>49 HPN<br>18 TMP | | AKW 1<br>——→ 60 % | 22,2/8,0 | -- | BUGL<br>50 % |

+) Vergleichsbeispiel

## Beispiel 15

Beispiel 15 betrifft die Herstellung eines Phosphorsäuregruppen enthaltenden acrylmodifizierten Alkydharzes. In einer Universalkunstharzanlage werden 100 Tle einer technischen isomerisierten Linolfettsäure mit einem Gehalt von ca. 50 % an konjugierter Linolsäure, 50 Tle einer technischen Linolsäure, 47 Tle Glyzerin und 30 Tle Trimethylolpropan auf 160 °C erhitzt. Dann werden 95 Tle Phthalsäureanhydrid und eine Mischung aus 6 Tlen Polyphosphorsäure (84 % $P_2O_5$) und 6 Tlen Äthanol zugegeben. Anschließend wird in 90 Minuten auf 180 °C erhitzt, auf 70 % mit AKW 1 verdünnt und unter Azeotropkreislauf verestert. Die Veresterung wird nach Erreichen einer Säurezahl von 17,0 mg KOH/g und einer Grenzviskositätszahl (Chloroform, 20 °C) von 10,1 ml/g abgebrochen.

107 Tle des 70 %igen phosphorsäuremodifizierten Alkydharzes und 58 Tle AKW 1 werden auf 90 °C erwärmt. Dann wird eine Mischung aus 19 Tlen Methylmethacrylat, 6 Tlen Styrol, 10 Tlen Shellsol AB und 2,4 Tlen Dibenzoylperoxid-Pulver, 50 %ig, (mit Weichmacher phlegmatisiert) im Verlauf von 1 1/2 Stunden gleichmäßig zugetropft. 3 Stunden nach Ende der Zugabe wird noch 1 Teil Dibenzoylperoxid 50 %ig zugegeben. Nach weiteren 4 Stunden ist die Reaktion beendet.

## Lacktechnische Prüfungen

(1) Herstellung und Prüfung der Lacke

(1.1) Lacke a-e ; Vergleichslacke Va, Vb und Vc (Tubenlacke)

Nach bekannten Methoden werden (beispielsweise unter Verwendung einer Dreiwalzenmühle) aus den in den Beispielen beschriebenen Harzen Lacke mit folgender Zusammensetzung hergestellt :

120 Tle Titandioxid (Rutil)

90 Tle Harz gemäß Beispiel (berechnet als Festharz)

10 Tle Hexamethoxymethylmelamin (HMMM ; 100 %ig) oder eines handelsüblichen, teilweise mit Butanol verätherten Melaminharzes, 60 %ig in Butanol (BMH, berechnet als Festharz).

Dem Vergleichslack Va werden 0,5 Tle p-Toluolsulfonsäure, dem Vergleichslack Vb 3 Tle eines äquimolaren Gemisches aus Phosphorsäuremono- und -dibutylester zugesetzt. Beim Vergleichslack Vc erfolgt kein weiterer Zusatz.

Die Lacke werden mit einem Lösungsmittelgemisch (AKW 1/BUGL 2 : 1) auf 1,5-2 Pa.s verdünnt und auf einer Tubenlackiermaschine auf Aluminiumtuben appliziert, 4 Minuten bei 90 °C vorgetrocknet, bedruckt und 4 Minuten bei 150 °C gehärtet (Trockenfilmstärke 10-15 µm).

Tabelle 7

| Lack | Harz ex Beispiel | Melamin-harz | Pendelhärte (s) | Glanz-schleier (ß) | Kältefestig-keit |
|------|------|------|------|------|------|
| (a) | 6 | HMMM | 183 | 2,48 | 1 |
| (b) | 12 | HMMM | 165 | 2,33 | 1 |
| (c) | 5 | BMH | 179 | 2,32 | 2 |
| (d) | 6 | BMH | 137 | 2,35 | 1 |
| (e) | 11 | BMH | 135 | 2,37 | 1 |
| (Va) | 14 | HMMM | 153 | 2,38 | 4 |
| (Vb) | 14 | HMMM | 144 | MATT | 5 |
| (Vc) | 14 | BMH | 128 | 2,34 | 5 |

Die Bedruckbarkeit ist, mit Ausnahme von (Vb), gut.

(1.2) Lacke (f) (Industrie-Einbrennlacke)

Aus 100 Tlen Titandioxid (Rutil), 91 Tlen Polyester gemäß Beispiel 13 (berechnet als Festharz) und 9 Tlen HMMM wird ein Lack hergestellt und mit einem 1 : 1-Gemisch auf EGLAC und BUAC auf eine Viskosität von 22 Sekunden (DIN 53 211/20 °C) eingestellt. Der Lack wird auf gereinigtes Stahlblech gespritzt und jeweils 30 Minuten bei 120 bzw. 140 bzw. 160 °C gehärtet.

(Siehe Tabelle 8 Seite 13 f.)

Tabelle 8

| Härtungs-temperatur | Pendelhärte (s) | Glanzschleier (ß) | Tiefung (mm) | Schlagfestigkeit inch/pounds |
|---|---|---|---|---|
| 120 | 175 | 2,48 | 7,5 | 80 / 80 |
| 140 | 185 | 2,42 | 6,5 | 80 / 80 |
| 160 | 178 | 2,38 | 6,0 | 60 / 20 |

(1.3) Lacke (g) und (h) ; Vergleichslacke (Vd) und (Ve) (Walzlacke)

Aus 100 Tlen Titantioxid (Rutil), 60 g Harz (berechnet als Festharz), 20 Tlen (Festharz) eines handelsüblichen Benzoguanamin-Formaldehydharzes (butanoloveräthert, Lieferform : 70 %ig in Butanol), 10 Tle eines Epoxidharzes (Epoxidäquivalent 180-192) und je 5 Tlen eines handelsüblichen Copolymerisats aus 86 % Vinylchlorid und 14 % Vinylacetat bzw. 83 % Vinylchlorid, 16 % Vinylacetat und 1 % Maleinsäure werden in üblicher Weise Lacke hergestellt. Der Vergleichslack (Ve) enthält zusätzlich 1 Tl p-Toluolsulfonsäure. Die Lacke werden mit einer 1 : 1-Mischung EGL/BUDIGL auf eine Viskosität von 100 bis 120 Sekunden (DIN 53 211/20 °C) verdünnt und durch Walzen auf verzinntes Eisenblech appliziert.

Härtung : 15 Min/140 °C

Trockenfilmstärke : 13-17 μm

Es resultieren hochglänzende Filme mit Glanzschleierwerten (β) über 2,3. Weitere Eigenschaften sind in Tabelle 9 zusammengefaßt.

Tabelle 9

| Lack | Harz ex Beispiel | Pendelhärte (s) | Tiefzieh-barkeit | Sterilisations-festigkeit |
|---|---|---|---|---|
| (g) | 5 | 196 | 1 | 1 |
| (h) | 11 | 176 | 1 | 1 |
| (Vd) | 14 | 123 | 1 | 5 |
| (Ve) | 14 | 170 | 2 | 5 |

(1.4) Lack (i) : Automobilfüller

Aus 50 Tlen Titandioxid (Rutil), 50 Tlen Bariumsulfat (gefällt), 0,2 Tlen Farbruß, 90 Tlen des in Beispiel 7 beschriebenen Polyesters (berechnet als Festharz), 10 Tlen HMMM, 2 Tlen DOLA und 0,6 Tlen eines Antiabsetzmittels auf Montmorillonit-Basis wird ein Lack hergestellt. Nach Verdünnen mit einer 1 : 1-Mischung EGLAC/BUAC auf eine Viskosität von 22 Sekunden (DIN 53 211/20 °C) wird der Lack auf gereinigte Stahlbleche gespritzt und 30 Minuten bei 120 bis 140 und 160 °C eingebrannt.

Tabelle 10

| Härtungs-temperatur | Pendelhärte (s) | Tiefung (mm) | Schlagfestigkeit (Fläche) (inch-pounds) |
|---|---|---|---|
| 120°C | 105 | 7,0 | 60 |
| 140°C | 118 | 9,2 | 80 |
| 160°C | 107 | 8,0 | 30 |

Prüfung im Dreischichtaufbau : Der Lack wird auf ein mit einer KETL-Grundierung versehenes zinkphosphatiertes Stahlblech gespritzt und bei 140 °C gehärtet. Anschließend wird ein handelsüblicher Autodecklack (Härtungstemperatur 135 °C) appliziert. Zum Vergleich wird ein handelsüblicher Automobilfüller auf Basis Rizinenalkyd/Epoxidharz/Harnstoffharz (7 : 1 : 2) in gleicher Weise eingesetzt.

**0 101 838**

Tabelle 11

| | Tiefung mm | Steinschlagtest % |
|---|---|---|
| Lack (i) | 5 | 5 |
| Vergleich | 2 | 40 |

(1.5) Lacke (j) und (k) : Harnstoffharzlack

Farbspasten folgender Zusammensetzung (in Tlen)

| | (j) | (k) |
|---|---|---|
| Titandioxid (Rutil) | 30 | 60 |
| Bariumsulfat (gefällt) | 30 | -- |
| Farbruß | 0,2 | -- |
| Bindemittel aus Beispiel 10 (berechnet als Festharz) | 70 | 70 |

wurden mit einer 1 : 1-Mischung aus EGLAC/BUAC auf einen Feststoffgehalt von ca. 50 % verdünnt. Vor der Applikation werden jeweils 30 Tle eines handelsüblichen Harnstoff-Formaldehydharzes zugemischt und die Viskosität mit BUAC auf 25 Sekunden (DIN 53 211/20 °C) eingestellt. Die Härtung erfolgt bei Raumtemperatur.

Tabelle 12

| Lack | klebfrei nach Stunden | Pendelhärte nach 1 Woche | 3 Monaten |
|---|---|---|---|
| (j) | 1 | 63 | 92 |
| (k) , | 1 | 60 | 80 |

(1.6) Lack (1) : Tubenlack ohne Aminoharz

Aus 120 Tlen TiO$_2$ (Rutil), 100 Tlen Harz gemäß Beispiel 15 (berechnet als Festharz) und 0,05 Tlen Co (eingesetzt als Co-octoat) wird ein Lack hergestellt, welcher nach Verdünnen mit AKW 1 auf ca. 2 Pa.s auf einer Tubenlackiermaschine auf Aluminium appliziert wird. Das Bedrucken erfolgt nach 6 Minuten Vortrocknung bei 80 °C, die Härtung 6 Minuten bei 160 °C. Die Beschichtung zeigt eine Pendelhärte von 36 Sekunden, einen Glanzschleierwert von 2,45 und eine Kältefestigkeit von 1.

**Patentansprüche**

1. Verfahren zur Herstellung von Phosphorsäuregruppen enthaltenden, gegebenenfalls modifizierten Polyesterharzen unter praktisch vollständiger Bindung der eingesetzten Phosphorsäure (derivate), dadurch gekennzeichnet, daß man bei einem Polyesteransatz, in welchem der Polysäureanteil mindestens 0,1, vorzugsweise 0,2 bis 1,5 Mol/kg des Fertigproduktes Phosphor in Form einer Polyphosphorsäure und/oder von sauren Phosphorsäureestern ein- oder mehrwertiger Alkohole enthält, die Veresterungsreaktion in einer 40 bis 80 Gew.-% Feststoffgehalt enthaltenden Lösung in einem oder mehreren in bezug auf die eingesetzten Rohstoffe inerten Verdünnungsmittel bis zur praktisch vollständigen Bindung der Phosphorsäure und einer Grenzviskositätszahl von 3,0 bis 25,0 ml/g (DMF, 20 °C) führt.

2. Verfahren nach Anspruch 1, dadurch gekennzeichnet, daß man als reaktionsinerte Verdünnungsmittel aromatische oder aliphatische Kohlenwasserstoff-Lösungsmittel mit Siedebereichen zwischen 110 und 220 °C einsetzt.

3. Verfahren nach den Ansprüchen 1 und 2, dadurch gekennzeichnet, daß man das Verdünnungsmittel stufenweise mit fortschreitender Reaktion zusetzt.

14

4. Verfahren nach den Ansprüchen 1 bis 3, dadurch gekennzeichnet, daß man die freien Phosphorsäuregruppen durch Salzbildung mit Aminen, vorzugsweise Alkanolaminen, blockiert.

5. Verfahren nach den Ansprüchen 1 bis 4, dadurch gekennzeichnet, daß zur Festlegung des Endpunktes der Reaktion die Ausbildung eines einwandfreien und glänzenden Lackfilms aus einem mit Titandioxid im P/B-Verhältnis 0,8 : 1 pigmentierten Lackes dient.

6. Verwendung der gemäß den Ansprüchen 1 bis 5 hergestellten Polyesterharze als Bindemittelkomponenten in Einbrennlacken.

7. Verwendung von gemäß den Ansprüchen 1 bis 5 hergestellten Polyesterharzen, welche einen Gehalt von 0,2 bis 0,8 Mol Phosphor pro Kilogramm des Fertigproduktes und eine Grenzviskositätszahl zwischen 3,0 und 5,0 ml/g (DMF, 20 °C) aufweisen, als Bindemittelkomponente für Einbrennlacke für Spritzapplikation.

8. Verwendung von gemäß den Ansprüche 1 bis 5 hergestellten Polyesterharzen, welche einen Gehalt von 0,3 bis 1,5 Mol Phosphor pro Kilogramm des Fertigproduktes und eine Grenzviskositätszahl von mindestens 6,0, vorzugsweise zwischen 8,0 und 25,0 ml/g (DMF, 20 °C) aufweisen, als sterilisationsfeste, flexible Einbrennlacke, insbesondere als Tubenlacke.

## Claims

1. Process for producing optionally modified polyester resins carrying phosphoric acid groups under practically complete binding of the phosphoric acid (derivatives) used, characterised in that of a polyester reaction batch, containing in the polyacid component a proportion of polyacid of at least 0.1, preferably 0.2 to 1.5 moles/kg of phosphor in the form of a polyphosphoric acid and/or of acidic phosphoric acid esters of mono- or polyvalent alcohols, the esterification reaction is carried out in a solution of 40 to 80 % by weight of solids in one or more diluting agents inert with regard to the raw materials used and is carried to the practically complete binding of the phosphoric acid and to an intrinsic viscosity of 3.0 to 25.0 ml/g (DMF, 20 °C).

2. Process according to claim 1, characterised in that aromatic or aliphatic hydrocarbon solvents with boiling ranges between 110 °C and 220 °C are used as reaction-inert solvents.

3. Process according to claims 1 and 2, characterised in that the diluting agent is added in increments with progressing reaction.

4. Process according to claims 1 to 3, characterised in that the free phosphoric acid groups are blocked through salt formation with amines, preferably alkanol amines.  ·

5. Process according to claims 1 to 4, characterised in that for the determination of the end point of the reaction of faultless radiant film of a paint pigmented in a P/B-ratio of 0.8 : 1 with titanium dioxide is used.

6. Use of the polyester resins produced according to claims 1 to 5 as binder components of stoving paints.

7. Use of the polyester resins produced according to claims 1 to 5, containing 0.2 to 0.8 moles of phosphor per kg of the end product and having an intrinsic viscosity of between 3.0 and 5.0 ml/g (DMF, 20 °C) as binder components of stoving paints for spray application.

8. Use of the polyester resins produced according to claims 1 to 5, containing 0.3 to 1.5 moles of phosphor per kg of the end product and having an intrinsic viscosity of at least 6.0, preferably of between 8.0 and 25.0 ml/g (DMF, 20 °C) as pasteurising flexible stoving paints, particularly as tube enamels.

## Revendications

1. Procédé pour la préparation de résines polyester éventuellement modifiées et contenant des groupes d'acide phosphorique, avec liaison pratiquement totale des dérivés d'acide phosphorique mis en œuvre, caractérisé par le fait que, dans le cas d'une charge de polyester dans laquelle la partie polyacide contient au moins 0,1, de préférence 0,2 à 1,5 mole/kg du produit final de phosphore sous forme d'un acide polyphosphorique et/ou d'un ester de l'acide phosphorique d'alcool mono- ou plurivalent, on conduit la réaction d'estérification au sein d'une solution contenant de 40 à 80 % en poids de matières sèches dans un ou plusieurs agents de dilution inertes à l'égard des matières premières mises en œuvre jusqu'à la liaison pratiquement complète de l'acide phosphorique et jusqu'à un indice de viscosité limite de 3,0 à 25,0 ml/g (DMF, 20 °C).

2. Procédé selon la revendication 1, caractérisé par le fait qu'en tant qu'agents diluants inertes à l'égard de la réaction, on utilise des solvants du type hydrocarbure, aromatiques ou aliphatiques, d'un domaine d'ébullition compris entre 110 et 120 °C.

3. Procédé selon les revendications 1 et 2, caractérisé par le fait que l'on ajoute l'agent de dilution par étapes en fonction de l'avancement de la réaction.

4. Procédé selon les revendications 1 à 3, caractérisé par le fait que les groupes phosphore libres sont bloqués par formation de sels avec des amines, de préférence des alcanolamines.

5. Procédé selon les revendications 1 à 4, caractérisé par le fait que, pour la détermination du point final de la réaction, on utilise la formation d'une pellicule de peinture échappant à la critique et brillante, pigmentée à l'aide de dioxyde de titane dans une proportion P/B de 0,8 : 1.

6. Application des résines de polyester selon les revendications 1 à 5, en tant que constituants de liaison dans des peintures ou vernis durcis par cuisson.

7. Application des résines de polyester préparées conformément aux revendications 1 à 5, présentant une teneur de 0,2 à 0,8 mole de phosphore pour 1 kg de produit fini et un indice de viscosité limite compris entre 3,0 et 5,0 ml/g (DMF, 20 °C) en tant que constituants de liaison pour des peintures à durcissement par cuisson pour l'application par pulvérisation.

8. Application des résines de polyester préparées conformément aux revendications 1 à 5, présentant une teneur de 0,3 à 1,5 mole de phosphore pour 1 kg de produit fini et un indice de viscosité limite d'au moins 6,0, de préférence entre 8,0 à 25,0 ml/g (DMF, 20 °C) en tant que vernis ou peintures flexibles à durcissement par cuisson, en particulier en tant que peintures pour tubes.